# EUROPÄISCHE PATENTSCHRIFT

(11) **EP 1 398 185 B1**
(45) Veröffentlichungstag und Bekanntmachung des Hinweises auf die Patenterteilung: **15.11.2006**
(21) Anmeldenummer: 02020214.9
(22) Anmeldetag: 10.09.2002
(51) Int. Cl.: B60D 1/00

(54) **Anhängekupplung**
Trailer coupling
Attelage de remorque

(43) Veröffentlichungstag der Anmeldung: 17.03.2004
(73) Patentinhaber: GKN Walterscheid Cramer GmbH, 53797 Lohmar (DE)
(72) Erfinder: Staude, Rudolf, Dr.-Ing., 42111 Wuppertal (DE)
(74) Vertreter: Albrecht, Rainer Harald

(56) Entgegenhaltungen:
- DE-A- 2 333 141
- FR-A- 1 171 103
- GB-A- 614 356
- US-A- 2 779 607
- US-A- 4 421 340

## Beschreibung

Die Erfindung betrifft eine Anhängekupplung mit einem Kupplungsmaul und einem in das Kupplungsmaul einführbaren Kupplungskörper (siehe z.B. FR-A-1 171 103, dem Oberbegriff entsprechend).

Anhängekupplungen sind in verschiedenen Ausführungsformen bekannt. Insbesondere kennt man Bolzen-Anhängekupplungen, bei welchen ein Kupplungsbolzen zwischen Offenstellung und Schließstellung lediglich linearverstellbar und undrehbar geführt ist. Ein ferner vorgesehener Hubmechanismus dient zugleich zum Verriegeln des Kupplungsbolzens in beiden Stellungen, wobei der Kupplungsbolzen in Schließstellung durch einen formschlüssig blockierten Kniegelenkmechanismus verriegelt wird. Bei solchen Ausführungsformen werden die von der eingekuppelten Zugöse in Anlage gegen den Kupplungsbolzen erzeugten Drehmomente unmittelbar auf den Hubmechanismus übertragen, so dass der Hubmechanismus tordierenden Beanspruchungen unterliegt. Darüber hinaus werden aber auch von der Zugöse erzeugte Schubkräfte von dem Kupplungsbolzen unmittelbar auf den Hubmechanismus übertragen, so dass der Hubmechanismus nicht nur Torsionsbeanspruchungen, sondern auch Schubbeanspruchungen unterliegt. Das führt zu erheblichen Verschleißerscheinungen und zu verkürzter Lebensdauer.

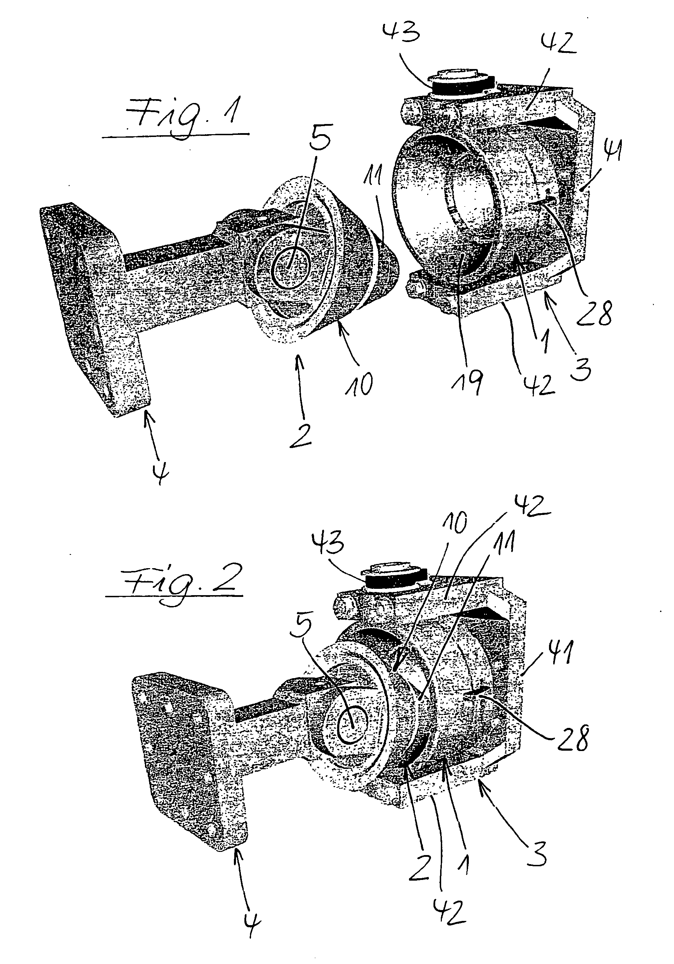

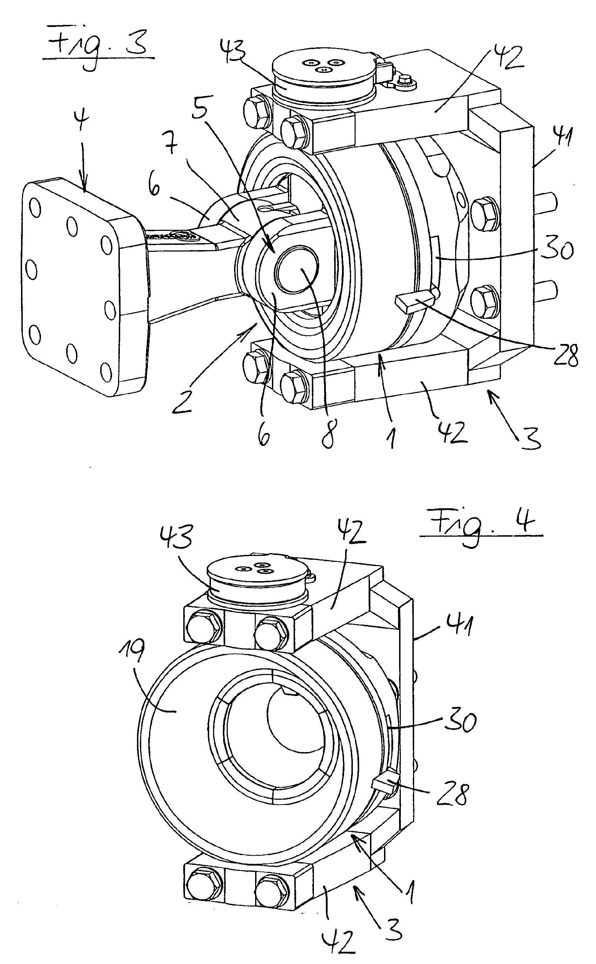

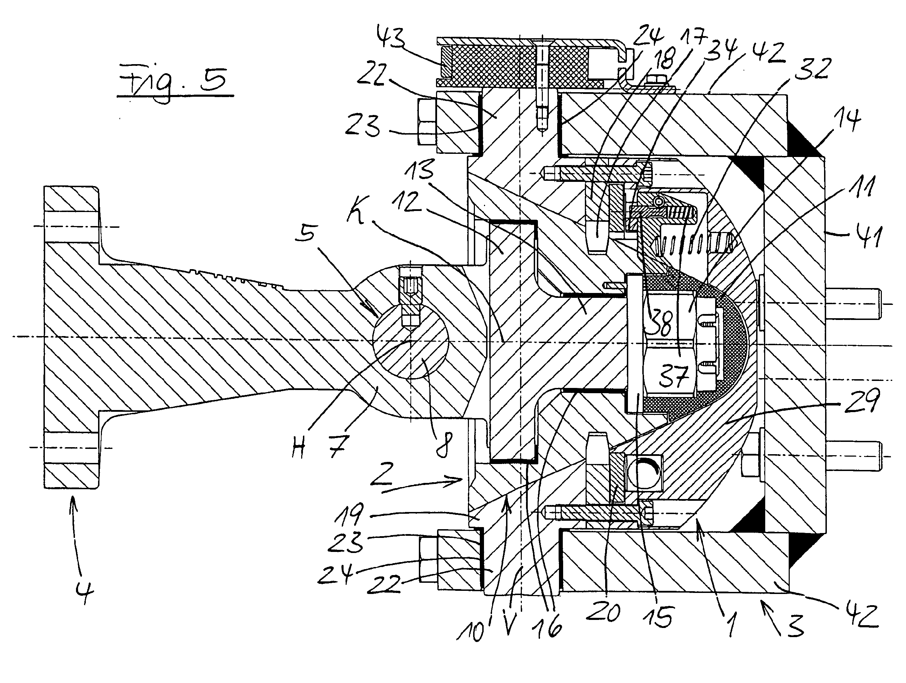

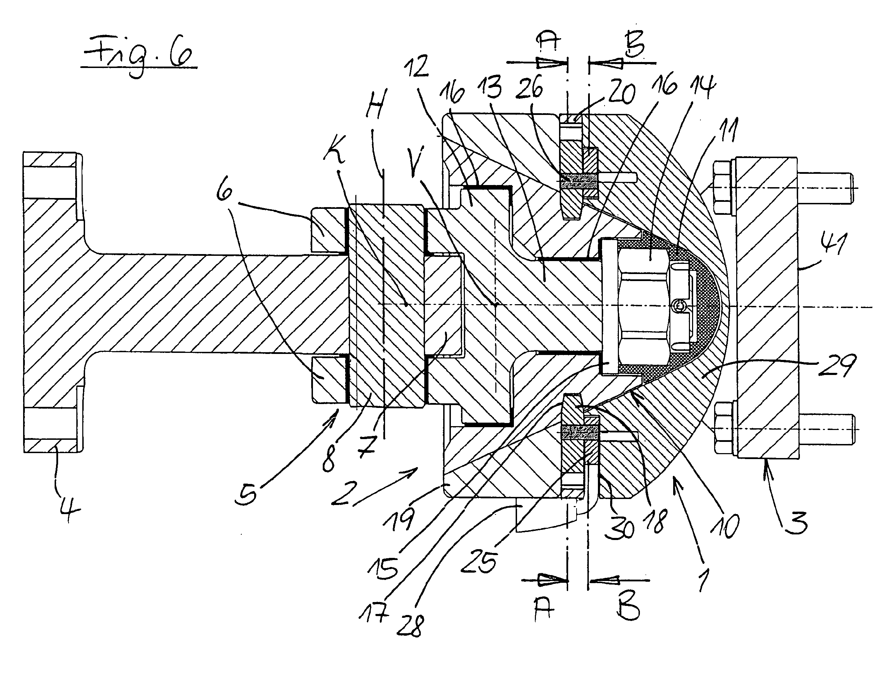

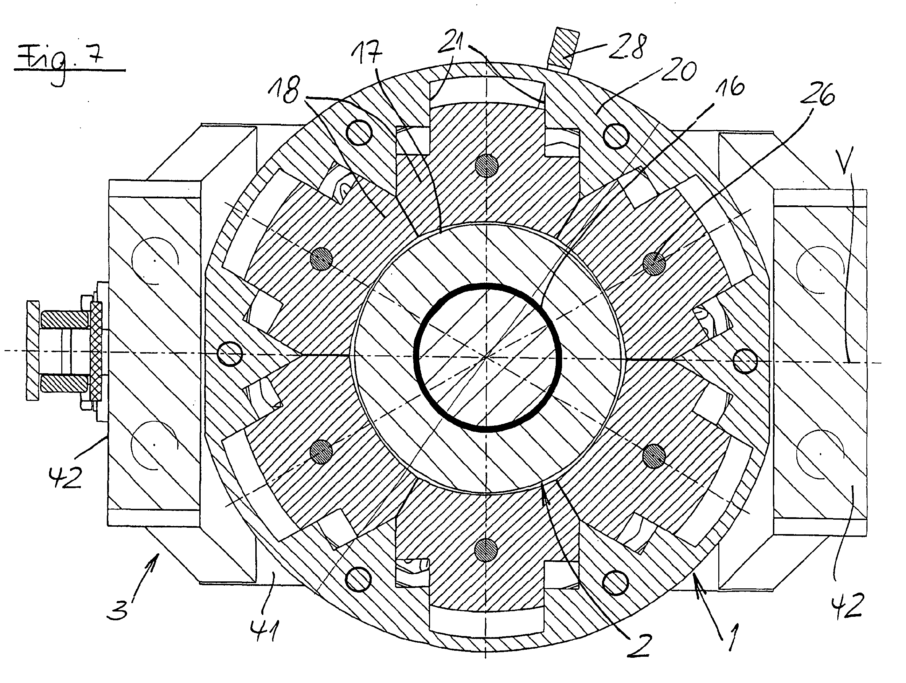

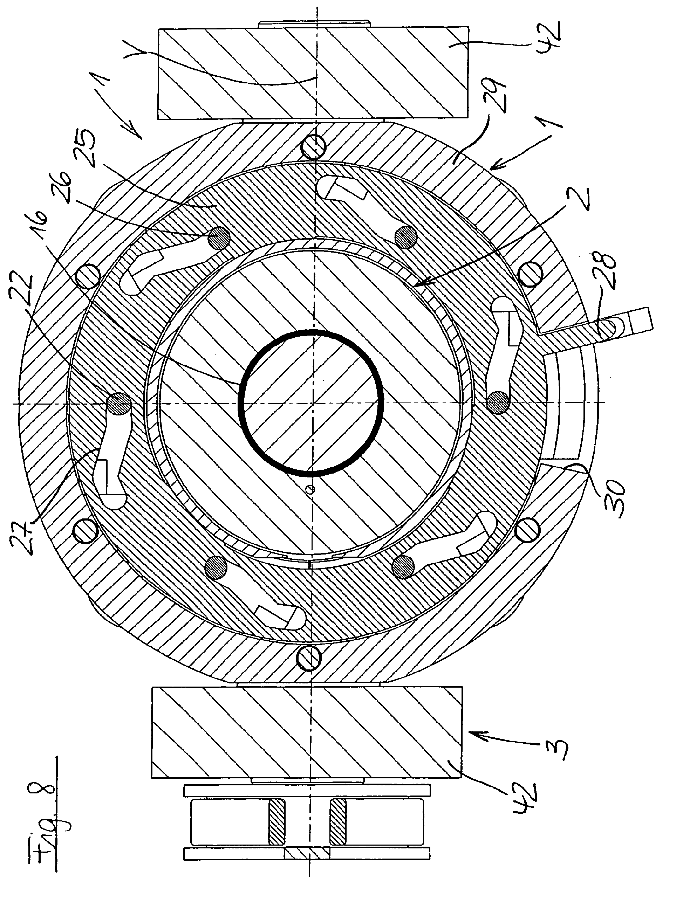

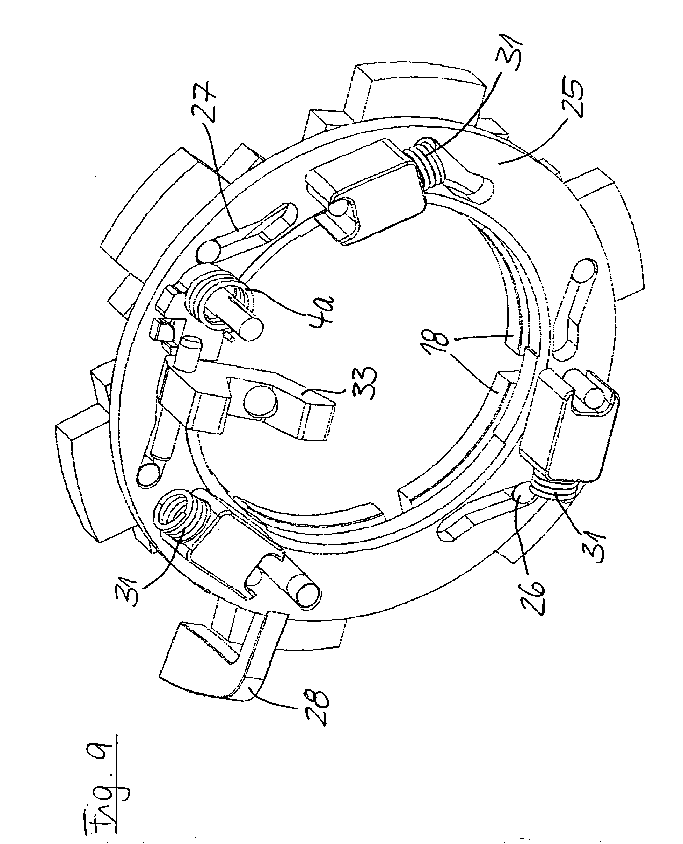

Aus der US-A-2 779 607 ist eine weitere Anhängekupplung bekannt, die ebenfalls Drehbewegungen bzw. Schwenkbewegungen um drei verschiedene Achsen, nämlich eine vertikale Achse, Lagerbock ist wiederum endseitig ein Kupplungskörper angeschlossen, welcher in ein Korrespondieres Kupplungsmaul einfahren kann, das beispielsweise an einem Anhänger befestigt ist. Der Kupplungskörper kahn sowohl zylinderförmig als auch bereichsweise Kegelförmig (s. Figur 4) ausgebildet sein. Dabei ist endseitig an den Kegelförmigen Bereich ein dickenreduzierter zylinder förmiger Abschnitt sowie daran ein kopfartiges Endstück 36 unter Bildung einer Nut angeschlossen, wobei das Ende des kopfes wiederum einen konischen Bereich aufweist; den Kegelförmigen Abschnitt 32 des Kupplungskörpers hintergreift eine wangenartige Arretierungsvorrichtung 50, 52, 54, 62.

Der Erfindung liegt die Aufgabe zugrunde, eine Anhängekupplung der eingangs beschriebenen Ausführungsform zu schaffen, die sich in kostensparender Weise durch erhöhte Funktionssicherheit und Verschleißarmut auszeichnet, ferner für Schwerlastanhängungen, insbesondere für sogenannte tiefe Anhängungen ebenso geeignet ist, wie für Starrdeichselanhänger aber auch für Nutzfahrzeuge, Fahrzeuge der Land- oder Forstwirtschaft, selbstfahrende Arbeitsmaschinen und KfZ-Transporter.

Diese Aufgabe löst die Erfindung bei einer gattungsgemäßen Anhängekupplung dadurch, dass der Kupplungskörper und das Kupplungsmaul unter Bildung einer Konuskupplung mit korrespondierender Konizität ausgebildet sind, dass der Kupplungskörper in dem Kupplungsmaul in gekuppeltem Zustand um die in Kupplungsrichtung verlaufende Konushauptachse drehbar gelagert ist und dass die Konuskupplung in einem Lagergehäuse um eine zur Konushauptachse orthogonale Vertikalachse schwenkbar gelagert ist, dadurch gekennzeichnet, daß der Kupplungskonus eine umlaufende Verschlussnut zum Einfahren und Ausfahren von den Kupplungskonus umgebenden und radial verstellbaren Verschlusssegmenten aufweist. Diese Maßnahmen der Erfindung haben zunächst einmal zur Folge, dass ein Kupplungssystem verwirklicht wird, welches ein spielfreies Kuppeln bei gleichzeitig großer Winkelbeweglichkeit erlaubt. Diese Winkelbeweglichkeit wird durch ein Drehkreuz mit zueinander senkrecht stehenden Drehachsen gebildet. Das gilt für die Vertikalachse, die das seitliche Zerschwenken der Konuskupplung bis zu mehr als 90° erlaubt, sowie für die Konushauptachse, welche die Vertikalachse schneidet und ein Verschwenken der Konuskupplung um eben diese Konushauptachse erlaubt. Nach einer bevorzugten Ausführungsform der Erfindung ist darüber hinaus an den Kupplungskörper deichselseitig ein Verbindungsflansch unter Zwischenschaltung eines Schwenklagers angeschlossen, wobei das Schwenklager eine zur Konushauptachse und Vertikalachse orthogonale Horizontalachse bildet. Auf diese Weise wird ein Drehkreuz mit drei zueinander senkrecht stehenden Drehachsen verwirklicht, wobei die Horizontalachse eine Auf- und Abbewegung des Kupplungskörpers und folglich der gesamten Konuskupplung ermöglicht. Im Rahmen der Erfindung können sich sämtliche Drehachsen schneiden, oder auch einen vorgegebenen Abstand voneinander haben. Jedenfalls erlaubt die erfindungsgemäße Konuskupplung die freie Bewegung beispielsweise einer Deichsel im Raum innerhalb relativ großer Winkelbereiche bei spielfreier Kupplung. Die Winkelbeweglichkeit der erfindungsgemäßen Konuskupplung wird durch das verwirklichte Drehkreuz auch während des Fahrens gewährleistet. Tatsächlich wird gleichsam ein kardanisches Gelenk nach dem Kuppeln verwirklicht. Aus der spielfreien Kupplung resultiert zugleich Verschleißfreiheit oder zumindest eine weitgehende Verschleißfreiheit.

Weitere Merkmale der Erfindung sind in den Unteransprüchen angegeben und sind im Folgenden aufgeführt. So kann das Schenklager zwei distanzierte Lagerwangen aufweisen, zwischen denen ein Lagerauge an dem Verbindungsflansch mittels eines Lagerbolzens und der Zwischenschaltung von Lagerbuchsen um die Horizontalachse schwenkbar gelagert ist. - Der Kupplungskörper weist zweckmäßigerweise einen Kupplungskonus mit einer konischen Abdeckkappe mit stirnseitiger Abrundung auf. Diese Abdeckkappe, die zwar das Einführen des Kupplungskörpers in das Kupplungsmaul erleichtert, jedoch am eigentlichen Kupplungsvorgang nach dem Kuppeln praktisch nicht mehr teilnimmt, besteht aus biegesteifen Kunststoff oder Metall, zum Beispiel Messing. Das Schwenklager weist vorzugsweise deichselseitig die Lagerwangen und kupplungsseitig einen Lagerzapfen auf, auf den der Kupplungskonus und die Abdeckkappe fixiert sind. Der Lagerbund und der Lagerzapfen sind im dem Kupplungskonus unter Zwischenschaltung von Lagerbuchsen um die Konushauptachse drehbar gelagert. Mit dem Lagerzapfen kann auch die darauf befestigte Abdeckkappe gedreht werden, die mit einem vorgegebenen Bewegungsspiel in das Kupplungsmaul eingreift. Erfindungsgemäß weist der Kupplungskonus eine umlaufende Verschlussnut zum Einfahren und Ausfahren von den Kupplungskonus umgebenden und radial verstellbaren Verschlusssegmenten auf. Die in die Verschlussnut eingefahrenen Verschlusssegmente arretieren den Kupplungskonus nach erfolgtem Kupplungsvorgang im Kupplungsmaul. Die Verschlussnut und die Verschlusssegmente sind mit korrespondierender Konizität ausgebildet, um auch insoweit einen spielfreien und folglich verschleißfreien Eingriff zu gewährleisten. Darüber hinaus ist eine einwandfreie Positionierung des Kupplungskörpers in dem Kupplungsmaul sichergestellt. Der Kupplungskonus ist in gekuppelter Stellung erfindungsgemäß von einem Konusring als Bestandteil des Kupplungsmauls spielfrei umgeben, wobei stirnseitig an dem Konusring ein Führungsring mit radialen Führungsausnehmungen für die radial beweglichen Verschleißelemente befestigt ist. Der Konusring weist auf sich gegenüberliegenden Seiten vertikale Lagerzapfen auf, die unter Bildung der Vertikalachse in entsprechenden Zapfenaufnahmen in dem Lagergehäuse unter Zwischenschaltung von Lagerbuchsen drehbar gelagert sind.

Nach weiterer Lehre der Erfindung ist dem Führungsring mit den Verschlusssegmenten stirnseitig ein Steuerring für die Verschlusssegmente zugeordnet, wobei in den Verschlusssegmenten befestigte Steuerzapfen in unter Radienzunahme bzw. -abnahme schrägverlaufende Steuernuten des um seine Mittelachse in Umfangsrichtung drehbar gelagerten Steuerrings eingreifen. Folglich resultiert aus einer Drehbewegung des Steuerrings eine radiale Hin- und Herbewegung der Verschlusssegmente im zugeordneten Führungsring. Der Steuerring weist einen radial aus dem Kupplungsmaul vorkragenden Betätigungshebel auf. Vorzugsweise sind der Führungsring mit den Verschlusselementen und der Steuerring zwischen dem Konusring und einem Deckel mit Innenkonus als weiterer Bestandteil des Kupplungsmauls angeordnet, wobei der Deckel stirnseitig an dem Konusring befestigt ist und sein Innenkonus die gleiche Konizität wie der Innenkonus des Konusringes aufweist, also mit der Konizität des Konusringes fluchtet. Dieser Deckel kann eine Führungsausnehmung für den Betätigungshebel des Steuerrings besitzen. Zweckmäßigerweise sind an dem Steuerring über seinen Umfang verteilte und in Umfangsrichtung wirkende Stellfedern angeordnet, die am Deckel mit vorgegebener Spannung abgestützt sind und bei freigegebenem Steuerring eine Drehbewegung des Steuerrings in seine Unfangsrichtung erzeugen. Weiter empfiehlt die Erfindung, dass in dem Deckel und an dem Steuerring ein auf den Steuerring wirkender Auslösemechanismus angeordnet ist, welcher den Steuerring für eine Drehbewegung freigibt oder als Sicherheitsmechanismus arretiert. Erst nach Freigabe des Steuerrings durch den Auslösemechanismus sorgen also die Stellfedern für eine Drehbewegung des Steuerrings um einen vorgegebenen Drehwinkel. Gemäß einer Weiterbildung der Erfindung weist der Auslösemechanismus einen an bzw. in dem Deckel gegen eine Rückstellfeder in Kupplungsrichtung schwenkbar gelagerten Auslösehebel auf, der von dem in das Kupplungsmaul einfahrenden Kupplungskörper bzw. Kupplungskonus verschwenkt wird und auf einen an dem Deckel in Ringebene des Steuerrings schwenkbar gelagerten Rasthebel arbeitet, wobei der Rasthebel eine Rastausnehmung zum Einrasten eines an dem Steuerring befestigten Rastnockens aufweist und diesen nach Betätigung durch den Auslösehebel freigibt. Denn bei in Schließstellung befindlicher Konuskupplung ist der Auslösehebel (von.dem Kupplungskonus) betätigt und dadurch der Rasthebel unter Freigabe des Rastnockens niedergedrückt, so dass der Steuerring in Folge seiner umfangseitigen Federbeaufschlagung um ein vorgegebenes Maß gedreht ist und die Verschlusssegmente in Schließstellung überführt hat. In dem Auslösehebel kann ein in Richtung auf den Rasthebel vorkragender und gegen die Wirkung einer Druckfeder eindrückbarer Betätigungsstift gelagert sein, der in ausgefahrener Stellung beim Einschwenken des Auslösehebels auf eine Taste des Rasthebels in Schwenkrichtung des Rasthebels arbeitet, wodurch der Rastnocken freigegeben wird. Der Rasthebel ist von einer Rückstellfeder beaufschlagt.

Das Lagergehäuse ist als U-förmiges deichselseitig offenes Gehäuse mit einer zugmaschinenseitig anschließbaren U-Basis und die Konuskupplung übergreifenden U-Schenkeln ausgebildet, in denen sich die Zapfenaufnahmen für die Lagerzapfen an dem Konusring befinden. Ferner ist auf dem einen oberen U-Schenkel eine Mittelstandfeder zum Zentrieren des Kupplungsmauls (Konusring mit Deckel) in Mittelstellung angeordnet, wobei diese Mittelstandfeder an einen Lagerzapfen des Konusringes angeschlossen ist.

Bei der erfindungsgemäßen Konuskupplung handelt es sich um ein neues Kupplungssystem, das ein spielfreies Kuppeln bei gleichzeitig hoher Winkelbeweglichkeit erlaubt. Aus der Spielfreiheit resultiert zugleich Verschleißfreiheit oder zumindest weitgehende Verschleißfreiheit. Es handelt sich bei der Konuskupplung um ein geschlossenes System mit kleinen Bauabmessungen, die innerhalb der für eine 50er Bolzennormkupplung angegebenen Maße liegen. Darüber hinaus kann die erfindungsgemäße Konuskupplung technisch und wirtschaftlich interessante Anwendungen bei Starrdeichsel-Anhängern finden. Die Zugdeichseln solcher Starrdeichsel-Anhänger können dann als stabile Balken mit Hohlkastenprofil ausgebildet sein. Aber auch Anwendungen für sämtliche Schwerlastanhängungen und insbesondere für tiefe Anhängungen sind möglich. Das gilt für Nutzfahrzeuge ebenso wie für Fahrzeuge der Land- oder Forstwirtschaft, selbstfahrende Arbeitsmaschinen, KfZ-Transporter usw..

Im Folgenden wird die Erfindung anhand einer lediglich ein Ausführungsbeispiel darstellenden Zeichnung näher erläutert:

Es zeigen:
- Fig. 1: Eine erfindungsgemäße Anhängekupplung in perspektivischer Darstellung und entkuppeltem Zustand,
- Fig. 2: den Gegenstand nach Fig. 1 im Zuge eines Kupplungsvorganges,
- Fig. 3: den Gegenstand nach Fig. 1 nach Abschluss des Kupplungsvorganges und folglich bei in das Kupplungsmaul eingeführtem Kupplungskörper,
- Fig. 4: das Kupplungsmaul für den Gegenstand nach Fig. 1 in perspektivischer Darstellung,
- Fig. 5: einen Vertikalschnitt durch eine erfindungsgemäße Anhängekupplung,
- Fig. 6: einen Horizontalschnitt durch den Gegenstand nach Fig. 5,
- Fig. 7: einen Querschnitt AA durch den Gegenstand nach Fig. 6 im Bereich des Führungsringes mit seinen in Schließstellung befindlichen Verschlusssegmenten,
- Fig. 8: einen Querschnitt BB durch den Gegenstand nach Fig. 6 im Bereich des Steuerrings mit seinen Steuernuten,
- Fig. 9: den Steuerring für den Gegenstand nach Fig. 1 in perspektivischer Darstellung bei gedrücktem Auslösehebel und in Offenstellung befindlichen Verschlusssegmenten,
- Fig. 10: den Gegenstand nach Fig. 9 bei gedrücktem Auslösehebel und in Schließstellung befindlichen Verschlusssegmenten,
- Fig. 11: den Gegenstand nach Fig. 9 ohne Auslösehebel,
- Fig. 12: Auslösehebel und Rasthebel für den Gegenstand nach Fig. 9 bei entlastetem Auslösehebel und
- Fig. 13: den Gegenstand nach Fig. 1 in Explosivdarstellung.

In den Figuren ist eine Anhängekupplung mit einem Kupplungsmaul 1 und einem in das Kupplungsmaul 1 einführbaren Kupplungskörper 2 dargestellt. Der Kupplungskörper 2 und das Kupplungsmaul 1 sind unter Bildung einer Konuskupplung mit korrespondierender Konizität ausgebildet. Der Kupplungskörper 2 ist in dem Kupplungsmaul 1 im gekuppelten Zustand um die in Kupplungslängsrichtung verlaufende Konushauptachse K drehbar gelagert. Die Konuskupplung ist in einem Lagergehäuse 3 um eine zur Konushauptachse K orthogonale Vertikalachse V schwenkbar gelagert. An den Kupplungskörper 2 ist deichselseitig ein Verbindungsflansch 4 unter Zwischenschaltung eines Schwenklagers 5 angeschlossen. Das Schwenklager 5 bildet eine zur Konushauptachse K und Vertikalachse V orthogonale Horizontalachse H. Ferner weist das Schwenklager 5 zwei distanzierte Lagerwangen 6 auf, zwischen denen ein Lagerauge 7 an dem Verbindungsflansch 4 mittels eines Lagerbolzens 8 unter Zwischenschaltung von Lagerbuchsen 9 um die Horizontalachse H schwenkbar gelagert ist.

Der Kupplungskörper 2 weist einen Kupplungskonus 10 mit einer konischen Abdeckkappe 11 mit stirnseitiger Abrundung auf. Die Abdeckkappe 11 besteht aus biegesteifem Kunststoff. Das Schwenklager 5 weist deichselseitig die Lagerwangen 6 und kupplungsseitig einen Lagerbund 12 mit Lagerzapfen 13 auf, auf dem der Kupplungskonus 10 und die Abdeckkappe 11 fixiert sind. Dazu ist eine auf den Lagerzapfen 13 aufschraubbare Befestigungsmutter 14 mit einer Befestigungsscheibe 15 für den Kupplungskonus 10 vorgesehen, während die Abdeckkappe 11 die Befestigungsmutter 14 überdeckt und darauf befestigt ist. Der Lagerbund 12 und der Lagerzapfen 13 sind in dem Kupplungskonus 10 unter Zwischenschaltung von Lagerbuchsen 16 um die Konushauptachse K drehbar gelagert. Während der Kupplungskonus 10 spielfrei in das Kupplungsmaul 1 eingreift, ist zwischen der Abdeckkappe 11 und dem Kupplungsmaul 1 ein Bewegungsspiel vorgesehen, so dass die Abdeckkappe 11 mit dem Lagerbund 12 und dem Lagerzapfen 13 gedreht werden kann.

Erfindungsgemäß weist der Kupplungskonus 10 eine umlaufende Verschlussnut 17 zum Einfahren und Ausfahren von den Kupplungskonus 10 umgebenden und radial verstellbaren Verschlusssegmenten 18 auf. Diese Verschlusssegmente 18 dienen zum Verriegeln des in das Kupplungsmaul 1 eingefahrenen Kupplungskonus 10 in gekuppelter Stellung. Die Verschlussnut 17 und die Verschlusssegmente 18 sind mit korrespondierender Konizität ausgebildet, um einen spielfreien Eingriff und folglich eine einwandfreie Positionierung des Kupplungskonus 10 in gekuppelter Stellung zu gewährleisten. Der Kupplungskonus 10 ist in gekuppelter Stellung von einem Konusring 19 als Bestandteil des Kupplungsmauls 1 spielfrei umgeben. An den Konusring 19 ist stirnseitig ein Führungsring 20 mit radialen Führungsausnehmungen 21 für die radialbeweglichen Verschlusselemente 18 befestigt. Der Konusring 19 weist auf sich gegenüberliegenden Seiten vertikale Lagerzapfen 22 auf, die unter Bildung der Vertikalachse V in entsprechenden Zapfenaufnahmen 23 in dem Lagergehäuse 3 unter Zwischenschaltung von Lagerbuchsen 24 drehbar gelagert sind. Dem Führungsring 20 mit den Verschleißsegmenten 18 ist stirnseitig ein Steuerring 25 für die Verschlusssegmente 18 zugeordnet. In den Verschlusssegmenten 18 sind Steuerzapfen 26 befestigt, die in unter Radiuszunahme bzw. - abnahme schrägverlaufende Steuernuten 27 des um seine Mittelachse in Umfangsrichtung drehbar gelagerten Steuerrings 25 eingreifen. Eine Drehbewegung des Steuerrings 25 führt also zu einer Hin- und Herbewegung der Verschlusssegmente 18 eben in Schließstellung oder Offenstellung. Der Steuerring 25 weist einen radial aus dem Kupplungsmaul 1 vorkragenden Betätigungshebel 28 auf, über den sich der Steuerring 25 in Drehbewegung versetzen lässt. Der Führungsring 20 mit den Verschlusselementen 18 und der Steuerring 25 sind zwischen dem Konusring 19 und einem Deckel 29 mit Innenkonus als weiterer Bestandteil des Kupplungsmauls 1 angeordnet. Der Deckel 29 ist stirnseitig an dem Konusring 19 befestigt und sein Innenkonus weist die gleiche Konizität wie der Innenkonus des Konusringes 19 auf, so dass also eine fluchtende Konizität gegeben ist. Im Übrigen weist der Deckel 29 eine Führungsausnehmung 30 für den nach außen austretenden Betätigungshebel 28 auf.

An dem Steuerring 25 sind über seinen Umfang verteilte und in Umfangsrichtung wirkende Stellfedern 31 angeordnet, die am Deckel 29 mit vorgegebener Spannung abgestützt sind und den Steuerring 25 in Drehbewegung versetzen können. In dem Deckel 29 und an dem Steuerring 25 ist ein auf den Steuerring 25 wirkender Auslösemechanismus angeordnet, welcher den Steuerring 25 für eine Drehbewegung über den Betätigungshebel 28 oder über die angreifenden Stellfedern 31 freigibt oder auch als Sicherheitsmechanismus arretiert.

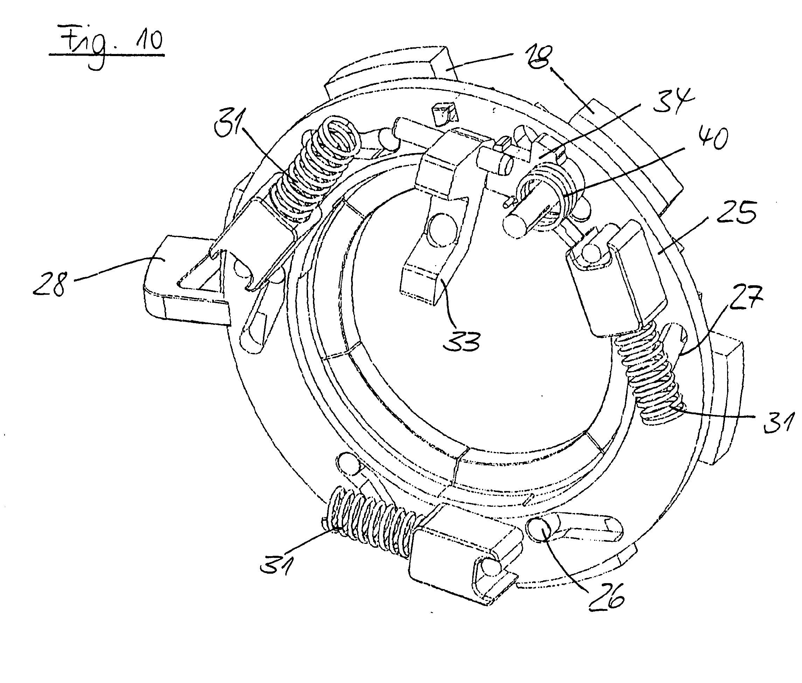

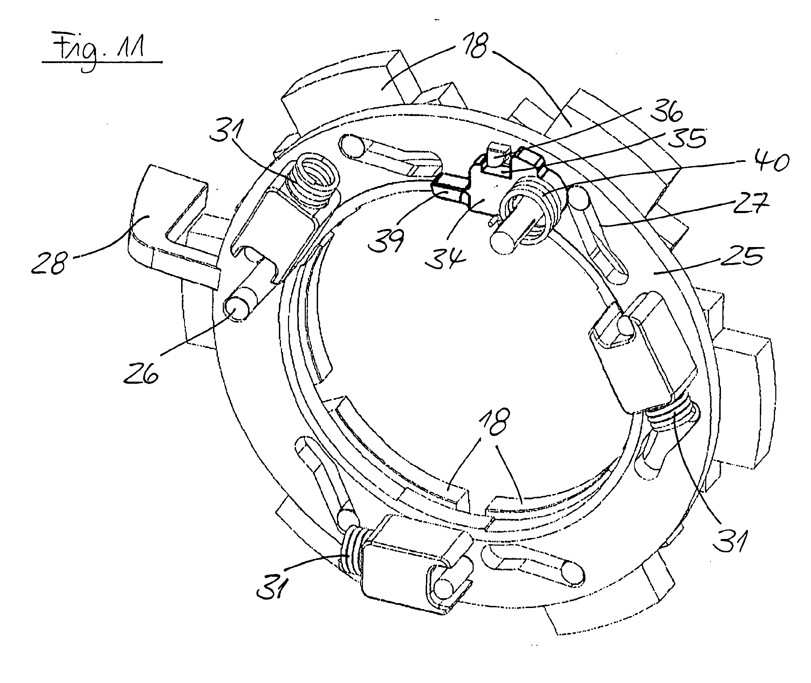

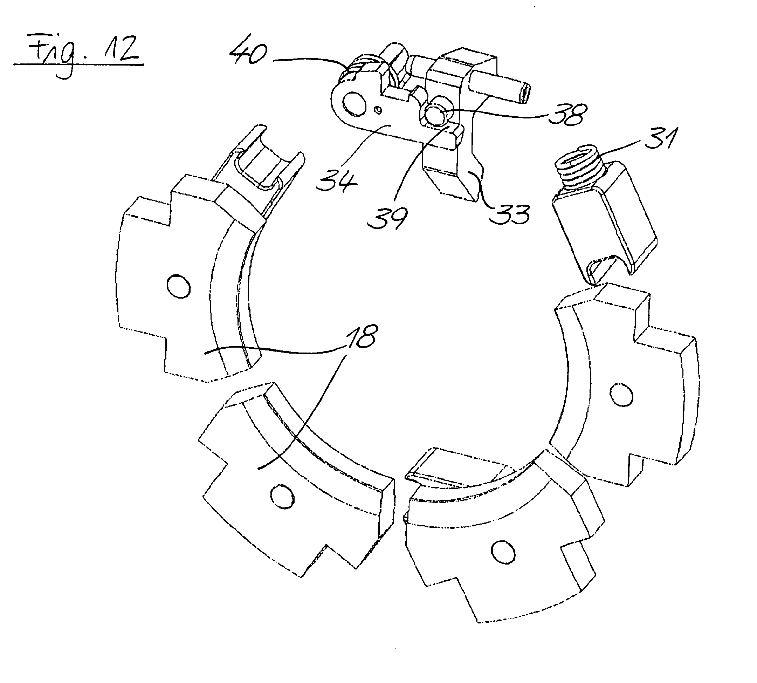

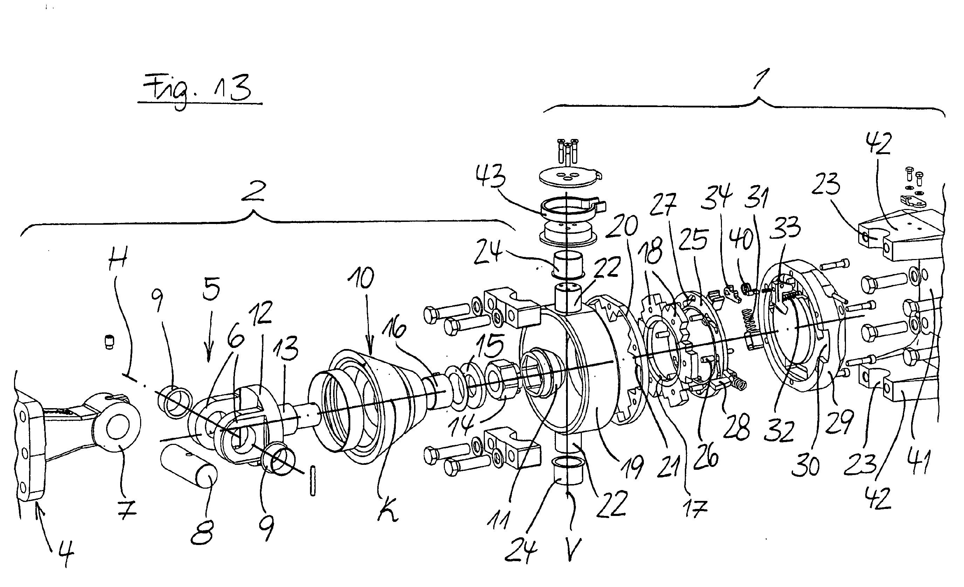

Der Auslösemechanismus weist einen an bzw. in den Deckel 29 gegen eine Rückstellfeder 32 in Kupplungsrichtung schwenkbar gelagerten Auslösehebel 33 auf, der von dem in das Kupplungsmaul 1 einfahrenden Kupplungskörper 2 bzw. Kupplungskonus 10 verschwenkt wird und auf einen an dem Deckel 29 in Ringebene des Steuerrings 25 schwenkbar gelagerten Rasthebel 34 arbeitet, wobei der Rasthebel 34 einer Rastausnehmung 35 zum Einrasten eines an dem Steuerring 25 befestigten Rastnockens 36 aufweist. Bei in Schließstellung befindlicher Konuskupplung ist der Auslösehebel 33 von dem Kupplungskonus 10 betätigt und der Rasthebel 34 unter Freigabe des Rastnockens 36 niedergedrückt. Der Steuerring 25 ist in Folge seiner umfangseitigen Federbeaufschlagung um ein vorgegebenes Winkelmaß gedreht und hat die Verschlusssegmente 18 in Schließstellung überführt (vgl. Fig. 10). In dem Auslösehebel 33 ist eine in Richtung auf den Rasthebel 34 vorkragende und gegen die Wirkung einer Druckfeder 37 eindrückbarer Betätigungsstift 38 gelagert, der in ausgefahrener Stellung beim Einschwenken des Auslösehebels 33 auf eine Taste 39 des Rasthebels 34 in Schwenkrichtung des Rasthebels arbeitet. Der Rasthebel 34 ist von einer Rückstellfeder 40 beaufschlagt.

Das Lagergehäuse 3 ist als U-förmiges deichselseitig offenes Gehäuse mit einer zugmaschinenseitig anschließbaren U-Basis 41 und die Konuskupplung übergreifenden U-Schenkeln 42 ausgebildet, in denen sich die Zapfenaufnahmen 23 für die Lagerzapfen 22 an dem Konusring 19 befinden. Auf dem einen oberen U-Schenkel 42 ist eine Mittelstandfeder 43 zum Zentrieren des Kupplungsmauls 1 in Mittelstellung angeordnet. Diese Mittelstandfeder 43 ist an den zugeordneten Lagerzapfen 22 des Konusringes 19 angeschlossen. Das Öffnen der Konuskupplung erfolgt durch Betätigen des Steuerringes 25 mittels des Betätigungshebels 28 in Umfangsrichtung. Dabei werden die Verschlusssegmente 18 angehoben und geben den Kupplungskonus 10 frei. Zum Schließen der Konuskupplung wird der Kupplungskörper bzw. sein Kupplungskonus 10 soweit in das Kupplungsmaul 1 eingefahren bis der dadurch betätigte Auslösehebel 33 und folglich niedergedrückte Rasthebel 34 den Steuerring 25 freigibt. Die in Umfangsrichtung wirkenden Stellfedern 31 drehen den Steuerring 25 in die Schließposition. Die Verschlusssegmente 18 werden dadurch in die Verschlussnut 17 des Kupplungskonus 10 überführt und Verriegeln den Kupplungskonus 10 bzw. Kupplungskörper 2 in dem Kupplungsmaul 1 in Kuppelstellung. Zugleich erfolgt eine mechanische Verriegelung, so dass der Steuerring 25 nicht unbeabsichtigt in die Offenposition bewegt werden kann.

## Patentansprüche

1. Anhängekupplung mit einem Kupplungsmaul (1) und einem in das Kupplungsmaul (1) einführbaren Kupplungskörper (2), wobei der Kupplungskörper (2) und das Kupplungsmaul (1) unter Bildung einer Konuskupplung mit korrespondierender Konizität ausgebildet sind, wobei der Kupplungskörper (2) in dem Kupplungsmaul (1) in gekuppeltem Zustand um die in Kupplungslängsrichtung verlaufende Konushauptachse (K) drehbar gelagert ist, wobei die Konuskupplung in einem Lagergehäuse (3) um eine zur Konushauptachse (K) orthogonale Vertikalachse (V) schwenkbar gelagert ist, **dadurch gekennzeichnet, daß** der Kupplungskonus (10) eine umlaufende Verschlussnut (17) zum Einfahren und Ausfahren von den Kupplungskonus (10) umgebenden und radial verstellbaren Verschlusssegmenten (18) aufweist.

2. Anhängekupplung nach Anspruch 1, **dadurch gekennzeichnet, dass** an dem Kupplungskörper (2) ein Verbindungsflansch (4) unter Zwischenschaltung eines Schwenklagers (5) angeschlossen ist und das Schwenklager (5) eine zur Konushauptachse (K) orthogonale Horizontalachse (H) bildet.

3. Anhängekupplung nach Anspruch 2, **dadurch gekennzeichnet, dass** das Schwenklager (5) zwei Lagerwangen (6) aufweist zwischen denen ein Lagerauge (7) an dem Verbindungsflansch (4) mittels eines Lagerbolzens (8) unter Zwischenschaltung von Lagerbuchsen (9) um die Horizontalachse (H) schwenkbar gelagert ist.

4. Anhängekupplung nach einem der Ansprüche 1 bis 3, **dadurch gekennzeichnet, dass** der Kupplungskörper (2) einen Kupplungskonus (10) mit einer konischen Abdeckkappe (11) aufweist.

5. Anhängekupplung nach Anspruch 4, **dadurch gekennzeichnet, dass** die Abdeckkappe (11) aus biegeelastischem Kunststoff oder Metall, z. B. Messing besteht.

6. Anhängekupplung nach Anspruch 4 oder 5, **dadurch gekennzeichnet, dass** das Schwenklager (5) deichselseitig die Lagerwangen (6) und kupplungsseitig einen Lagerbund (12) mit einem Lagerzapfen (13) aufweist auf dem der Kupplungskonus (10) und die Abdeckkappe (11) fixiert sind.

7. Anhängekupplung nach Anspruch 6, **dadurch gekennzeichnet, dass** der Lagerbund (12) und der Lagerzapfen (13) in dem Kupplungskonus (10) unter Zwischenschaltung von Lagerbuchsen (16) um die Konushauptachse (K) drehbar gelagert sind.

8. Anhängekupplung nach einem der Ansprüche 1 bis 7, **dadurch gekennzeichnet, dass** die Verschlussnut (17) und die Verschlusssegmente (18) mit korrespondierender Konizität ausgebildet sind.

9. Anhängekupplung nach einem der Ansprüche 1 bis 8, **dadurch gekennzeichnet, dass** der Kupplungskonus (10) in gekuppelter Stellung von einem Konusring (19) als Bestandteil des Kupplungsmauls (1) umgeben ist und das stirnseitig an dem Konusring (19) ein Führungsring (20) mit radialen Führungsausnehmungen (21) für die Verschlusselemente (18) befestigt ist.

10. Anhängekupplung nach Anspruch 9, **dadurch gekennzeichnet, dass** der Konusring (19) auf sich gegenüberliegenden Seiten Lagerzapfen (22) aufweist, die unter Bildung der Vertikalachse (V) in entsprechenden Zapfenaufnahmen (23) in dem Lagergehäuse (3) unter Zwischenschaltung von Lagerbuchsen (24) drehbar gelagert sind.

11. Anhängekupplung nach Anspruch 9 oder 10, **dadurch gekennzeichnet, dass** dem Führungsring (20) mit den Verschlusssegmenten (18) ein Steuerring (25) für die Verschlusssegmente (18) zugeordnet ist und dass in den Verschlusssegmenten (18) befestigte Steuerzapfen (26) in unter Radiuszunahme.bzw. -abnahme schrägverlaufende Steuernuten (27) des um seine Mittelachse in Umfangsrichtung drehbar gelagerten Steuerrings (25) eingreifen.

12. Anhängekupplung nach Anspruch 11, **dadurch gekennzeichnet, dass** der Steuerring (25) einen radial aus dem Kupplungsmaul (1) vorkragenden Betätigungshebel (28) aufweist.

13. Anhängekupplung nach Anspruch 11 oder 12, **dadurch gekennzeichnet, dass** der Führungsring (20) mit den Verschlusselementen (18) und der Steuerring (25) zwischen dem Konusring (19) und einem Deckel (29) mit Innenkonus als Bestandteil des Kupplungsmauls (1) angeordnet sind, wobei der Deckel (29) an dem Konusring (19) befestigt ist und sein Innenkonus die gleiche Konizität wie der Innenkonus des Konusringes (19) aufweist.

14. Anhängekupplung nach Anspruch 13, **dadurch gekennzeichnet, dass** der Deckel (29) eine Führungsausnehmung (30) für den Betätigungshebel (28) aufweist.

15. Anhängekupplung nach Anspruch 13 oder 14, **dadurch gekennzeichnet, dass** an dem Steuerring (25) über seinen Umfang verteilte und in Umfangsrichtung wirkende Stellfedern (31) angeordnet sind, die am Deckel (29) abgestützt sind.

16. Anhängekupplung nach einem der Ansprüche 13 bis 15, **dadurch gekennzeichnet, dass** in dem Deckel (29) und an dem Steuerring (25) ein auf den Steuerring (25) wirkender Auslösemechanismus angeordnet ist, welcher den Steuerring (25) für eine Drehbewegung freigibt oder als Sicherheitsmechanismus arretiert.

17. Anhängekupplung nach Anspruch 16, **dadurch gekennzeichnet, dass** der Auslösemechanismus einen an dem Deckel (29) gegen eine Rückstellfeder (32) in Kupplungsrichtung schwenkbar gelagerten Auslösehebel (33) aufweist, der von dem in das Kupplungsmaul (1) einfahrenden Kupplungskörper (2) verschwenkt wird und auf einen an dem Deckel (29) in Ringebene des Steuerrings (25) schwenkbar gelagerten Rasthebel (34) arbeitet, wobei der Rasthebel (34) eine Rastausnehmung (35) zum Einrasten eines an dem Steuerring (25) befestigten Rastnockens (36) aufweist.

18. Anhängekupplung nach Anspruch 17, **dadurch gekennzeichnet, dass** bei in Schließstellung befindlicher Konuskupplung der Auslösehebel (33) betätigt ist und der Rasthebel (34) unter Freigabe des Rastnockens (36) niedergedrückt ist und dass der Steuerring (25) in Folge seiner umfangseitigen Federbeaufschlagung um ein vorgegebenes Winkelmaß gedreht ist und die Verschlusssegmente (18) in Schließstellung überführt hat.

19. Anhängekupplung nach einem der Ansprüche 17 bis 18, **dadurch gekennzeichnet, dass** in dem Auslösehebel (33) ein in Richtung auf den Rasthebel (34) vorkragender und gegen die Wirkung einer Druckfeder (37) eindrückbarer Betätigungsstift (38) gelagert ist, der in ausgefahrener Stellung auf eine Taste (39) des Rasthebels (34) in Schwenkrichtung des Rasthebels (34) arbeitet.

20. Anhängekupplung nach einem der Ansprüche 17 bis 19, **dadurch gekennzeichnet, dass** der Rasthebel (34) von einer Rückstellfeder (40) beaufschlagt ist.

21. Anhängekupplung nach einem der Ansprüche 10 bis 20, **dadurch gekennzeichnet, dass** das Lagergehäuse (3) als U-förmiges deichselseitig offenes Gehäuse mit einer zugmaschinenseitig anschließbaren U-Basis (41) und die Konuskupplung übergreifenden U-Schenkeln (42) ausgebildet ist, in denen sich die Zapfenaufnahmen (23) für die Lagerzapfen (22) an dem Konusring (19) befinden.

22. Anhängekupplung nach Anspruch 21, **dadurch gekennzeichnet, dass** auf dem einen U-Schenkel (42) eine Mittelstandfeder (43) zum Zentrieren des Kupplungsmauls (1) in Mittelstellung angeordnet ist und dass diese Mittelstandfeder (43) an einen Lagerzapfen (22) des Konusrings (19) angeschlossen ist.

## Claims

1. Tow coupling with a coupling jaw (1) and a clutch body (2), which may be inserted into the coupling jaw (1), whereby the clutch body (2) and the coupling jaw (1) are formed by the formation of a cone clutch with corresponding conicity, whereby the clutch body (2) in its couple state is seated in the coupling jaw (1) so that it is rotatable around the longitudinally in relation to the coupling extending main axis of the cone (K), whereby the cone clutch inside a bearing casing (3) is seated pivotably around an orthogonally to the main axis of the cone (K) extending vertical axle (V), **characterised in that** it is provided with a coupling cone (10) with a circumferential breech nut (17) for insertion or retraction of the radially adjustable locking segments (18) surrounding the coupling cone (10).

2. Tow coupling in accordance with claim 1, **characterised in that** a connecting flange (4) is connected to the clutch body (2) with interposition of a pivot bearing (5) and **characterised by** the fact that the pivot bearing forms a horizontal axis (H) orthogonal to the main axis of the cone (K).

3. Tow coupling in accordance with claim 2, **characterised in that** the pivot bearing (5) is provided with two bearing side plates (6), between which a pivot (7) is seated on the connection flange (4) with the aid of a bearing pin (8) by interposition of bearing bushes (9), whereby the pivot (7) is pivotable around the horizontal axis (H).

4. Tow coupling in accordance with one of the claims 1 to 3, **characterised in that** the clutch body (2) is provided with a coupling cone (10) with a conical protective cap (11).

5. Tow coupling in accordance with claim 4, **characterised in that** the protective cap (11) consists of a flexible plastic or metal, i.e. brass.

6. Tow coupling in accordance with claim 4 or 5, **characterised in that** the pivot bearing (5) is equipped on the drawbar-side with the bearing side plates (6) and on the coupling-side a thrust bearing collar (12) with a bearing journal (13), to which the coupling cone (10) and the protective cap (11) are attached.

7. Tow coupling in accordance with claim 6, **characterised in that** the thrust bearing collar (12) and the bearing journal (13) are seated inside the coupling cone (10) with interposed bearing bushes (16), so that they can be rotated around the main axis of the cone (K).

8. Tow coupling in accordance to one of the claims 1 to 7, **characterised in that** the breech nut (17) and the locking segments (18) are formed with corresponding conicity.

9. Tow coupling in accordance with one of the claims 1 to 8, **characterised in that** the coupling cone (10), in coupled position, is surrounded by a cone ring (19) as a component of the coupling jaw (1) and that a bearing ring (20) with radial guide recesses (21) for the locking elements (18) are attached at the front of the cone ring (19).

10. Tow coupling in accordance with claim 9, **characterised in that** the cone ring (19) is equipped with bearing pins (22) located on opposite sides, which are rotatably seated by forming a vertical axis (V) in corresponding receiving elements (23) in the bearing casing (3) with interposition of bearing bushes (24).

11. Tow coupling in accordance with claim 9 or 10, **characterised in that** a connector ring (25) for the locking-segments (18) is assigned to the bearing ring (20) with the locking segments (18) and that connecting rods (26) fixed on the locking segments (18) lock into the control grooves (27) running transverse with increasing or decreasing radius on the connector ring (25), which is seated so that it can be rotated around its central axis in the direction of the circumference.

12. Tow coupling in accordance with claim 11, **characterised in that** the connector ring (25) is provided with a radially from the coupling jaw (1) protruding operating lever (28).

13. Tow coupling in accordance with claim 11 or 12, **characterised in that** the bearing ring (18) together with the locking elements (18) and the connecting ring (25) between the cone ring (19) and the cap (29) with inner cone are arranged as a component of the coupling jaw (1), whereby the cap (29) is attached to the cone ring (19) and its inner cone is provided with the same conicity as the inner cone of the cone ring (19).

14. Tow coupling in accordance with claim 13, **characterised in that** the cap (29) possesses a guide recess (30) for the operating lever (28).

15. Tow coupling in accordance with claim 13 or 14, **characterised in that** adjusting springs (31) acting in the direction of the circumference are distributed around the circumference of the connector ring (25), which are supported at the cap (29).

16. Tow coupling in accordance with one of the claims 13 to 15, **characterised in that** a trigger mechanism is arranged in the cap (29) and on the connector ring (25), which acts on the connector ring (25) and which - as a safety mechanism - releases the connector ring (25) for a rotating movement.

17. Tow coupling in accordance with claim 16, **characterised in that** the trigger mechanism possesses a trigger lever (33), which is seated in such a way, that it can be pivoted on the cap (29) against a readjusting spring (32) in the direction of the coupling, whereby the trigger lever (33) is deflected by the clutch body (2) inserted into the coupling jaw (1) and acts on a dwell lever (34), which is seated in such a way that it can pivot on the cap (29) at the ring level of the connector ring (25), whereby the dwell lever (34) is provided with a dwell recess (35) in order to engage a dwell cam (36) attached to the connector ring (25).

18. Tow coupling in accordance with claim 17, **characterised in that** the trigger lever (33) is operated when the cone clutch is in a locked position and that the dwell lever (34) releases the dwell cam (36), when it is pressed down, and that the connector ring (25) is rotated by a preset angle due to the arrangement of the springs around its circumference and that the locking segments (18) are moved into the locking position.

19. Tow coupling in accordance with one of the claims 17 to 18, **characterised in that** an operating pin (38) is seated in the trigger lever (33) extruding in direction of the dwell lever (34), which can be pressed down against the action of a compression spring (37), whereby the operating pin (38) acts in its extended position on a push button (39) of the dwell lever (34) in the pivoting direction of the dwell lever (34).

20. Tow coupling in accordance with one of the claims 17 to 19, **characterised in that** the dwell lever (34) is admitted by a readjusting spring (40).

21. Tow coupling in accordance with one of the claims 10 to 20, **characterised in that** the bearing casing (3) is formed as a U-shaped casing open towards the drawbar and formed on the side of the motor tractor with a connectable U-base (41) and the cone clutch overlapping U-legs (42), wherein the receiving elements (23) for the bearing journals (22) are located on the cone ring (19).

22. Tow coupling in accordance with claim 21, **characterised in that** a centring spring (43) for the centring of the coupling jaw (1) is arranged on one U-Ieg (42) in centre-position and that this centring spring (43) is connected to a bearing journal (22) of the cone-ring (19).

## Revendications

1. Dispositif d'attelage, avec une mâchoire d'attelage (1) et un organe d'attelage (2) que l'on peut introduire dans la mâchoire d'attelage (1), l'organe d'attelage (2) et la mâchoire d'attelage (1) étant conçus avec une conicité correspondante, en formant un attelage conique, en position attelée, l'organe d'attelage (2) étant logé dans la mâchoire d'attelage (1) de façon rotative autour de l'axe principal du cône (K) s'étendant en direction longitudinale de l'attelage, l'attelage conique étant logé dans un logement de palier (3), de façon pivotante autour d'un axe vertical (V) orthogonal par rapport à l'axe principal du cône (K), **caractérisé en ce que** le cône d'attelage (10) comporte une rainure de fermeture (17) périphérique pour rentrer et sortir des segments de fermeture (18) entourant le cône d'attelage (10) et réglables en direction radiale.

2. Dispositif d'attelage selon la revendication 1, **caractérisé en ce qu'**une bride d'assemblage (4) est raccordée sur l'organe d'attelage (2), avec montage intermédiaire d'un palier pivotant (5) et **en ce que** le palier pivotant (5) forme un axe horizontal (H) orthogonal par rapport à l'axe principal du cône (K).

3. Dispositif d'attelage selon la revendication 2, **caractérisé en ce que** le palier pivotant (5) comporte deux flasques de palier (6) entre lesquels un bossage de palier (7) est logé de façon pivotante autour de l'axe horizontal (H) sur la bride d'assemblage (4) au moyen d'un boulon de palier (8) avec montage intermédiaire de coussinets (9).

4. Dispositif d'attelage selon l'une quelconque des revendications 1 à 3, **caractérisé en ce que** l'organe d'attelage (2) comporte un cône d'attelage (10) avec une calotte de protection (11) conique.

5. Dispositif d'attelage selon la revendication 4, **caractérisé en ce que** la calotte de protection (11) est en matière plastique élastique flexible ou en métal, par exemple en laiton.

6. Dispositif d'attelage selon la revendication 4 ou 5, **caractérisé en ce que** côté timon, le palier pivotant (5) comporte les flasques de palier (6) et côté attelage, il comporte une collerette de palier (12) avec un tourillon (13) sur lequel le cône d'attelage (10) et la calotte de protection ((11) sont fixés.

7. Dispositif d'attelage selon la revendication 6, **caractérisé en ce que** la collerette de palier (12) et le tourillon (13) sont logés dans le cône d'attelage (10), de façon rotative autour de l'axe principal du cône (K) avec montage intermédiaire de coussinets (16).

8. Dispositif d'attelage selon l'une quelconque des revendications 1 à 7, **caractérisé en ce que** la rainure d'enclenchement (17) et les segments de fermeture (18) sont conçus avec un conicité correspondante.

9. Dispositif d'attelage selon l'une quelconque des revendications 1 à 8, **caractérisé en ce qu'**en position attelée, le cône d'attelage (10) est entouré par une bague conique (19) en tant qu'élément de la mâchoire d'attelage (1) et qu'une bague de guidage (20) avec des évidements de guidage (21) radiaux pour les éléments d'enclenchement (18) est fixée côté frontal sur la bague conique (19).

10. Dispositif d'attelage selon l'une quelconque des revendications 1 à 9, **caractérisé en ce que** la bague conique (19) comporte sur des côtés opposés des tourillons (22), qui en formant l'axe vertical (V) sont logés de façon rotative dans des logements de tourillons (23) correspondants dans le logement de palier (3), avec montage intermédiaire de coussinets (24).

11. Dispositif d'attelage selon la revendication 9 ou 10, **caractérisé en ce qu'**une bague de direction (25) pour les segments de fermeture (18) est associée à la bague de guidage (20) avec les segments de fermeture (18) et **en ce que** des tenons de direction (26) fixés dans les segments de fermeture (18) s'engagent avec un rayon croissant ou décroissant dans des rainures de direction (27) inclinées de la bague de direction (25), logée de façon rotative autour de son axe médian, en direction périphérique.

12. Dispositif d'attelage selon la revendication 11, **caractérisé en ce que** la bague de direction (25) comporte un levier de manoeuvre (28) saillant en direction radiale hors de la mâchoire d'attelage (1).

13. Dispositif d'attelage selon la revendication 11 ou 12, **caractérisé en ce que** la bague de guidage (20) avec les éléments d'enclenchement (18) et la bague de direction (25) sont disposés entre la bague conique (19) et un couvercle (29) avec cône intérieur, en tant qu'élément de la mâchoire d'attelage (1), le couvercle (29) étant fixé sur la bague conique (19) et son cône intérieur ayant la même conicité que le cône intérieur de la bague conique (19).

14. Dispositif d'attelage selon la revendication 13, **caractérisé en ce que** le couvercle (29) comporte un évidement de guidage (30) pour le levier de manoeuvre (28).

15. Dispositif d'attelage selon la revendication 13 ou 14, **caractérisé en ce que** des ressorts de réglage (31) qui s'appuient sur le couvercle (29) et agissant en direction périphérique sont disposés sur la bague de direction (25), en étant répartis sur sa périphérie.

16. Dispositif d'attelage selon l'une quelconque des revendications 13 à 15, **caractérisé en ce que** dans le couvercle (29) et sur la bague de direction (25) est disposé un mécanisme de déclenchement agissant sur la bague de direction (25), qui libère la bague de direction (25) pour une rotation ou la bloque en tant que mécanisme de sécurité.

17. Dispositif d'attelage selon la revendication 16, **caractérisé en ce que** le mécanisme de déclenchement comporte un levier de déclenchement (33) logé sur le couvercle (29) de façon pivotante en direction de l'attelage contre un ressort de rappel (32) qui est pivoté par l'organe d'attelage (2) entrant dans la mâchoire d'attelage (1) et qui agit sur un levier d'enclenchement (34) logé de façon pivotante sur le couvercle (29), dans le plan annulaire de la bague de direction (25), le levier d'enclenchement (34) comportant un évidement d'enclenchement (35) pour l'enclenchement d'une came d'enclenchement (36) fixée sur la bague de direction (25) .

18. Dispositif d'attelage selon la revendication 17, **caractérisé en ce que** lorsque l'attelage conique est en position de fermeture, le levier de déclenchement (33) est actionné et le levier d'enclenchement (34) est poussé vers le bas, en libérant la came d'enclenchement (36) et **en ce que** du fait de sa soumission périphérique à un ressort, la bague de direction (25) tourne d'une dimension angulaire prédéfinie et a amené les segments de fermeture (18) dans une position de fermeture.

19. Dispositif d'attelage selon l'une quelconque des revendications 17 à 18, **caractérisé en ce que** dans le levier de déclenchement (33) est logée une tige de manoeuvre (38) saillant en direction du levier d'enclenchement (34) et pouvant s'enfoncer contre l'action d'un ressort de pression (37), qui en position sortie agit sur une touche (39) du levier d'enclenchement (34), en position de pivotement du levier d'enclenchement (34).

20. Dispositif d'attelage selon l'une quelconque des revendications 17 à 19, **caractérisé en ce que** le levier d'enclenchement (34) est soumis à un ressort de rappel (40).

21. Dispositif d'attelage selon l'une quelconque des revendications 10 à 20, **caractérisé en ce que** le logement de palier (3) est conçu sous la forme d'un boîtier en forme de U, ouvert côté timon, avec une base en U (41) pouvant se raccorder côté engin tracteur et avec des branches en U (42) chevauchant l'attelage conique, dans lesquelles se trouvent les logements de tourillons (23) pour les tourillons (22) sur la bague conique (19).

22. Dispositif d'attelage selon la revendication 21, **caractérisé en ce que** sur l'une des branches en U (42) est disposé un ressort de positionnement central (43) pour le centrage de la mâchoire d'attelage (1) en position centrale et **en ce que** ce ressort de positionnement central (43) est raccordé sur un tourillon (22) de la bague conique (19).
